# EUROPEAN PATENT APPLICATION

(11) **EP 1 167 167 A2**
(43) Date of publication of application: **02.01.2002**
(21) Application number: 01500166.2
(22) Date of filing: 29.06.2001
(51) Int. Cl.: B62D 39/00

(54) **Vehicle with variable length**

(30) Priority: 29.06.2000 ES 200001657
(71) Applicant: Ruiz Peris, Antonio, 06400 Don Benito (Badajoz) (ES)
(72) Inventor: Ruiz Peris, Antonio, 06400 Don Benito (Badajoz) (ES)

(57) **Abstract**

Consists in a pack of elements applied to automobiles that together with a special design for the bodywork offers the opportunity to extend or to reduce, at will, the length and volume of the same.

The system consists of a body divided in two parts, adjusting the exterior rear part (1) over the front (2) by means of a guide and drive device the operation of enlargement or reduction.

Likewise the system comprises: blocking devices that immobilize the body at the end of its travel; beams of infrared lights that detect objects which could hinder the operation of reduction; and other electric elements to regulate the extension or reduction procedure.

## Description

### INVENTION PURPOSE

The present invention refer to a group of rocking gave windscreen wiper implanted in vehicles of new fabrication that lets to enlarge or to reduce, to will, its length. This option possesses a great advantage by the fickleness, so that is possible to dispose of a voluminous vehicle or a reduced one, when it should be needed. For example, to park if the interior space was not occupied in the enlarging zone.

### TECHNOLOGY SECTOR

It is principally given for Industry of the Automobile.

### RECORD OF INVENTION

The inventor and petitioner of the present invention disclaimed the existence in the state of the technique of other systems with similar purposes and designs.

### INVENTION DESCRIPTION

The carriage body of the vehicle is manner by two parts that couple an in the other perfectly and displace lengthwise by mediate of some guides with ball bearings firmly fixed to both parts of the carriage body and that funnel the enlargement and reduction movements.

Guides possess mooring charges with relays that stop both parts of the carriage body to the final of each operation.

Likewise, the system incorporates as other such elements: a lineal switch, coupled to one of guides, that acts during its displacement; an infrared sign system compound by two against set columns of light emitting diodes and light reception diodes respectively, a handbrake switch; a switch-relay; and a main switch.

### BRIEF DESCRIPTION OF DRAWINGS

Figure 1.- Lateral sight in lifted of the vehicle type A (reduced).
Figure 2.- Lateral sight in lifted of the vehicle type A ( enlarged ).
Figure 3.-Lateral sight in lifted of the vehicle type B ( reduced ).
Figure 4.-Lateral sight in lifted of the vehicle type B (enlarged).
Figure 5.-Frontal sight in lifted of the assembly of a guide.
Figure 6.-Sight in perspective of a guide with two principal separated parts.
Figure 7.-Sight in detail of the ball bearings ride an guide.
Figure 8.-Sight in longitudinal section of the assembly of both guides in the vehicle's superior zone (reduced).
Figure 9.-Sight in longitudinal section of the assembly of both guides in the vehicle's superior zone (enlarged).
Figure 10.-Sight in stops of the ball bearings ride an guide and the pieces of subjection of the same according to the plane B of the figure 6.
Figure 11.-Sight in lifted of the ball bearings ride an guide between the plans To and C of the figure 6.
Figure 12.-Frontal sight in lifted in stops of an mooring charge in repose position.
Figure 13.-Frontal sight in lifted in stops of an mooring charge in work position.

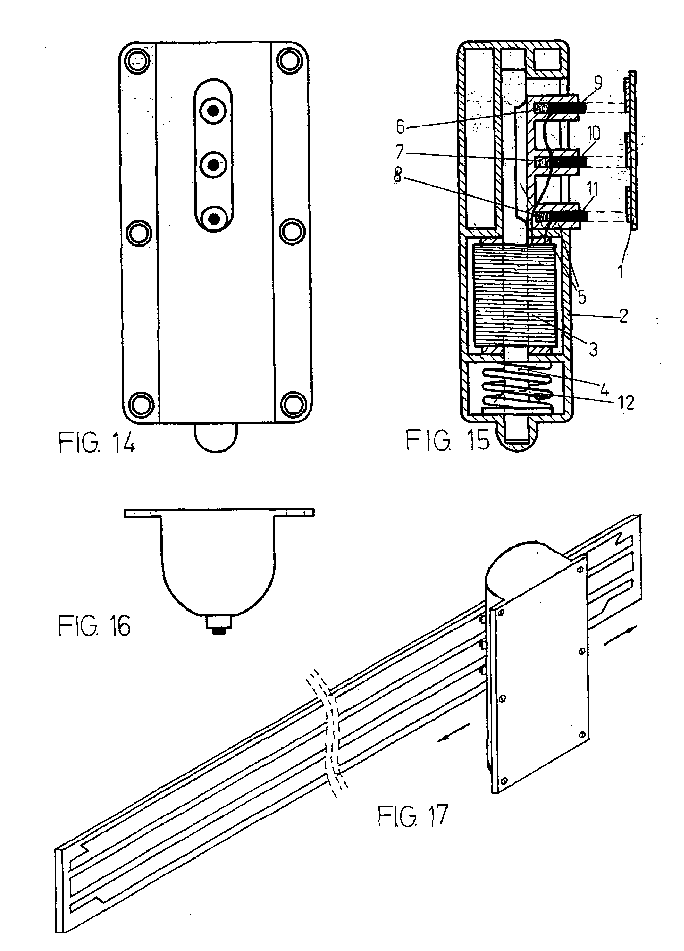

Figure 14.-Frontal sight in lifted of the lineal switch.
Figure 15.-Lateral sight in lifted in stops of the lineal switch and the starting piece.
Figure 16.-Sight in plant of the lineal switch.
Figure 17.-Sight in perspective of the lineal switch and the starting piece.
Figure 18.-To See schematic that defines the acting of the lineal switch over the starting piece.
Figure 19.-Sight in perspective of infrared columns.
Figure 20.-Back Sight in lifted of the vehicle in which to appreciate the position of some elements.
Figure 21.-Sight in plant of the vehicle in which to appreciate the position of some elements.
Figure 22.-Sight in lifted in stops of the main switch of the system in deactivated mode.
Figure 23.-Sight in lifted in stops of the main switch of the system in work mode.
Figure 24.-Sight in plant of the main switch of the system.
Figure 25.-Lateral sight in lifted in stops of the switch of handbrake in deactivated mode.
Figure 26.-Lateral sight in lifted in stops of the switch of handbrake in work mode.
Figure 27.-General circuit scheme of the system.

### A PREFERRED MANNER OF MANUFACTURE DESCRIPTION

The parts that composed the system are: special carriage body, guides, mooring charges, system main switch, lineal switch, handbrake switch, infrared system and switch-relay.

### The carriage body.

The system can be incorporated to new fabrication vehicles. The two parts that form the carriage body must go perfectly coupled an in the other.

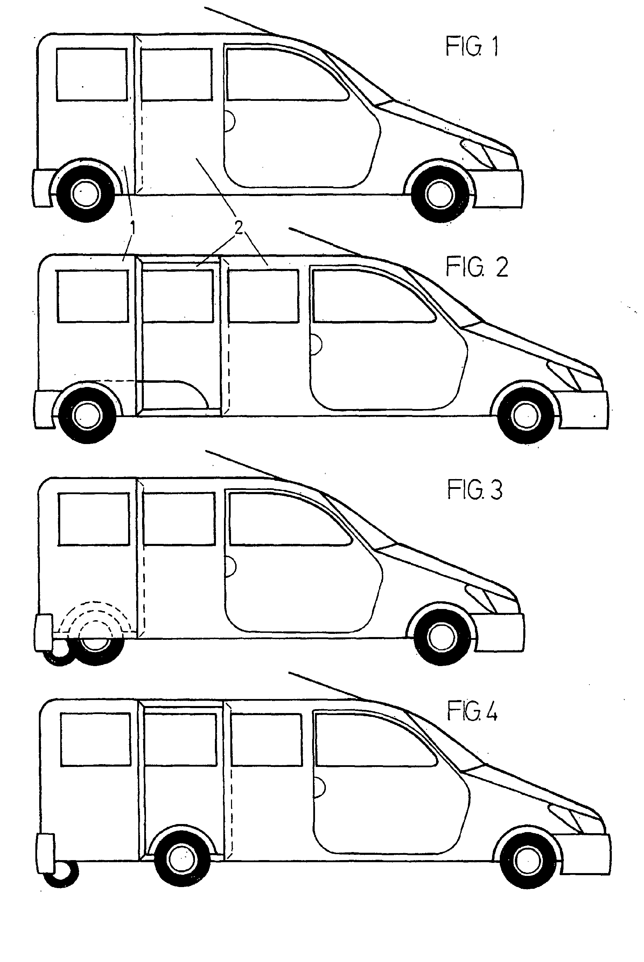

It can be done in two forms according to the part enlarges (rear) windscreen wiper coupled to the prior internal or external. The here elected couples the back part of the vehicle (1) external over the prior (2), model A, figures 1 and 2.

This prior part (2) is the main part of the vehicle and has the following zones: fall, fore seating (driver and passenger), rear seating and boot.

The rear part or enlarges (1) has the boot, that is the space zone can be enlarged.

### The guides.

They are steel elements, both parts of the carriage body can be displaced on. They are firmly united to these parts.

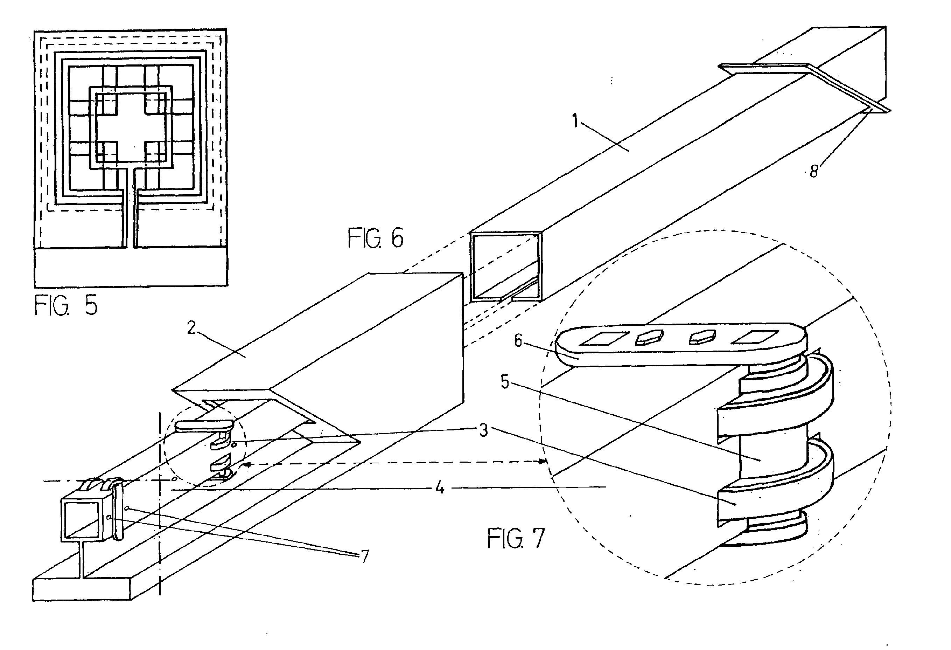

It is composed by two principal parts. The piece (1), fig. 6, displaces inside (2) and at the same time the ball bearings (3) of piece (2) slide across the inner side of piece (1). It has also various passing drills (7), situated to the beginning and at the end of the travelled of guides to finish the operation; and other in intermediate zones of the travelled with the object of detaining the process before some specific situations we will comment further.

The ball bearings are situated in the piece (2) by against set pairs in both faces of the zone (4). Thus same, these pairs of ball bearings go distributing alternately in horizontal and in vertical. So the longitude of the pieces (1) and (2) as the number of pairs of ball bearings to distribute will rely the particularities of every case.

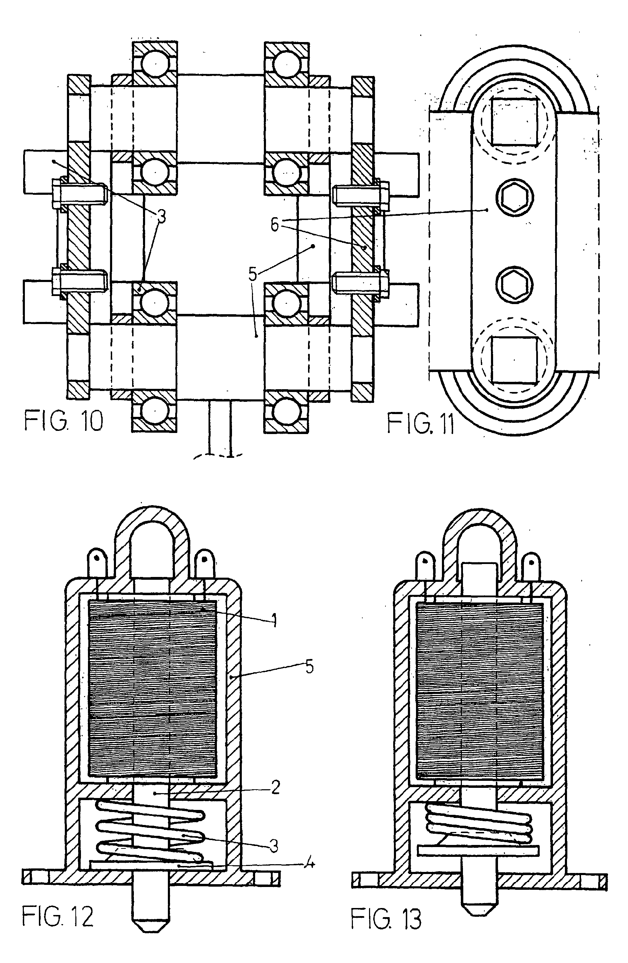

In the figures 7 and 10 appreciate the placement of the ball bearings (3) inserted into the piece of revolution (5) that finishes in both extremes in form of trunk of cube to be able to be captured by the piece (6) that likewise goes screwed to the zone (4).

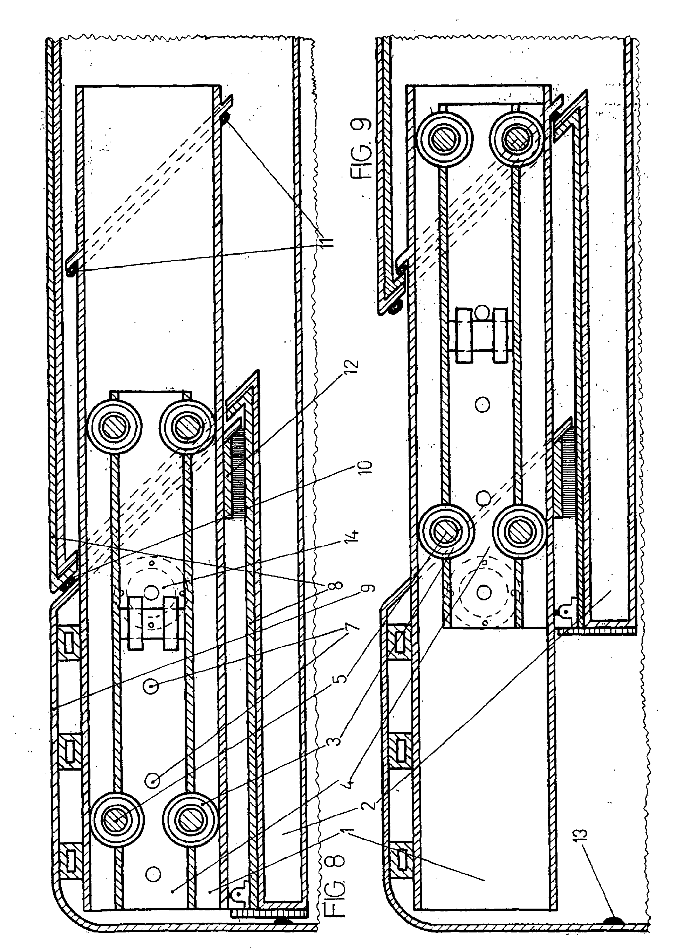

In the figures 8 and 9 we appreciate both sights sections of a guide of the roof mounted in the vehicle. The assembly of lower guides would be symmetrical to these. The fig. 8 Belongs to the vehicle in as reduced position see in the fig. 1; and the fig. 9 Belongs to the vehicle in position enlarged as see in the fig. 2.

In both figures appreciate the ball bearings (3) fixed to the piece (2) that displace along the piece (1).

The piece (2) of the guide is united to the front part of the carriage body (8) and the piece (1) to the rear part (9).

The hermetic rubber bands (10) and (11) serve to close off the vehicle in the operations. The hermetic rubber band (10) covers all the contour of the vehicle and it closes off in reduced position. The hermetic rubber band (11) covers the contour of the zone (4) of the piece (2) and it closes off in enlarged position.

The brush (12) covers all the contour of the vehicle and when it makes the operation it cleans some of the dirt accumulated in the zone enlarges the carriage body.

The rubber tops (13) make the mission of muffling when the operation of reduction is finished.

### The mooring charges.

They are mechanisms that have the mission to hold tight both parts of guides and thus to keep the vehicle in one of two main positions. Basically is a relay, figures 12 and 13 compound of a winding (1) in winch to a slider rod (2) kept inactive, fig. 12 by the action of a pier (3) that pressures a housing (4) united to the rod (2). The group was lodged inside a chassis (5). When electric current passes across the winding (1), fig. 13, the electromagnetic created field displaced the rod (2) defeating the opposition of the pier (3) liberating the union of both parts of the guide, letting these can be displaced.

In the figure 8 we can appreciate how the mooring charge (14) is mounted over the guide.

### The main switch.

His objectives are the activation and deactivation of the process acting over the mooring charges. This last function can be so as automatic as manual.

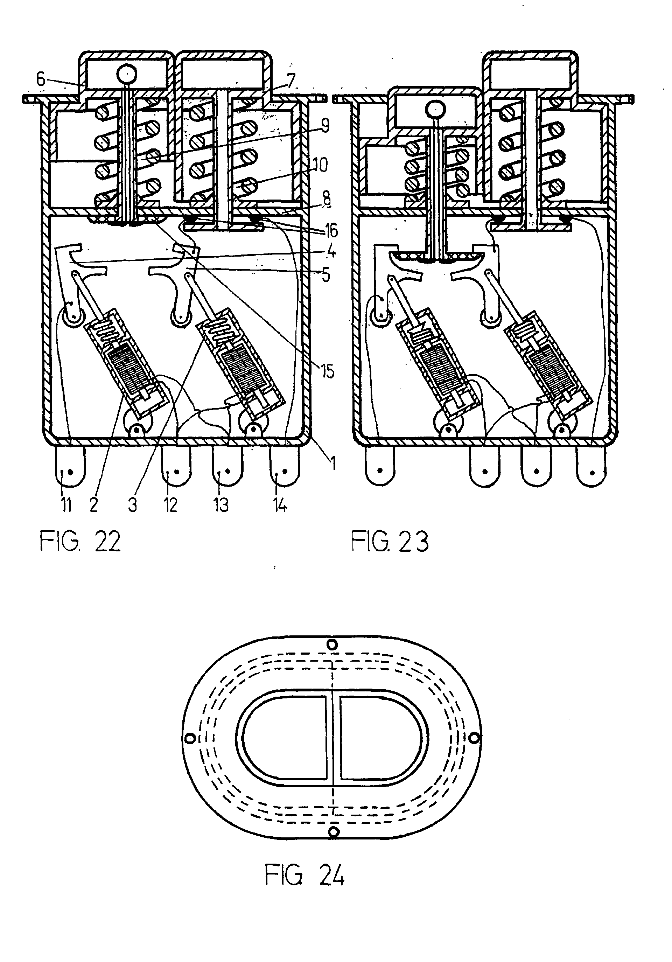

The mechanism, figures 22, 23 and 24, is compound by: a chassis (1) in which to lodged two little relays (2) and (3) that act over the moving pieces (4) and (5).

The two keys are over the splattered of the vehicle. The key (6) is ON mode and the (7) OFF mode (manual). These keys are limited in the vertical displacement by the veneer (8) belongs to the chassis (1). Inside the key (6) was lodged a bulb that indicates the working of the system. The keys extend windscreen wiper kept in the superior position by the action of the springs (9) and (10).

When we press the ON key (6) the housing (15) of this key contacts the moving pieces (4) and (5) across them the electric current passes, coming from the battery. This electric current raisin by the contacts (16) of the OFF key (7) and leaves by the terminal (14) toward other components of the circuit to return finally until the terminal (12), activating the relays (2) and (3), closing the circuit by the terminal (13) to slant to GND. When the relays activates, these kept sunken the ON key (6), for is captured by the moving pieces (4) and (5), and in this position the mooring charges of guides are active, is to tell, permit the displacement of these.

When guides have arrived to the final of the process of extension or reduction, the lineal switch stops the electric current toward the relays (2) and (3) liberating the ON key (6) that elevates by the action of the spring (9). Of this manner stops the electric current that raisin by mooring charges, remaining guides stopped in their travelling.

Also can turn off manually the functioning of the circuit pushing the OFF key (7) that impedes the pass of electric current toward the mooring charges.

### The lineal switch.

Its mission is to stop momentarily the pass of electric current by the circuit so that the mooring charges deactivate and guides remain blocked in the displacement.

It composes of two main parts, figure 15: a ready (1), with insulating base, for example of plastic material, in which there is fixed three copper pieces; and the relay. This last is compound by a chassis (2) in which it has a coil (3) that surrounds a rod (4) that is subjected for a piece with three cylinders (5). In each one of them are lodged the springs (6), (7) and (8) and the windscreen wiper made in graphite material (9), (10) and (11) that are that displace to slant of three plate of the ready. Possessed also a pier (12) that kept the relay in position of repose when electric current does not passes across the coil (3). The windscreen wipers (9) and (10) are united directly between themselves, and both get together to windscreen wiper (11) to slant of the coil (3).

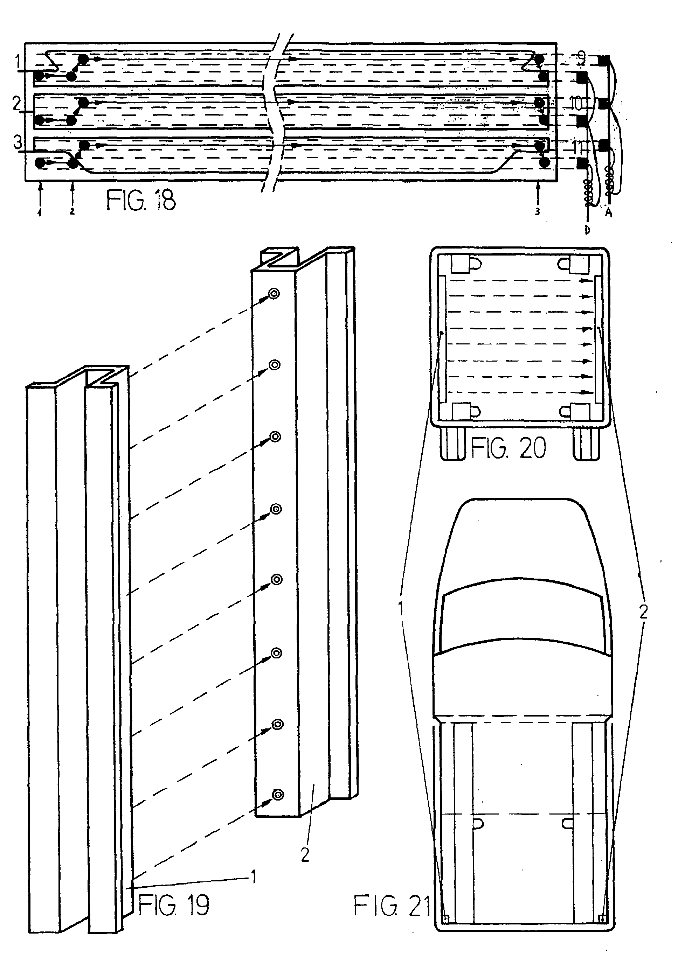

In the electric scheme in the figure 18 it appreciates the functioning of this switch. In the lineal position 1 the switch relay is deactivated why remains in "D" vertical position, but drives electric current from the terminal (1) until the terminal (2). Upon be displaced to the lineal position 2, part of the electric current that drives by the terminal (1) leaves by the terminal (3) across of the coil of the relay. This relay is activated and elevates to the vertical position A. Upon following displacing to the lineal position 3 stops the electric current that enters by the terminal (1) and the relay returns to the repose vertical position D.

With this little interruption of electric current, the main switch relays are deactivated and the mooring charges block the travelled of guides.

### The handbrake switch.

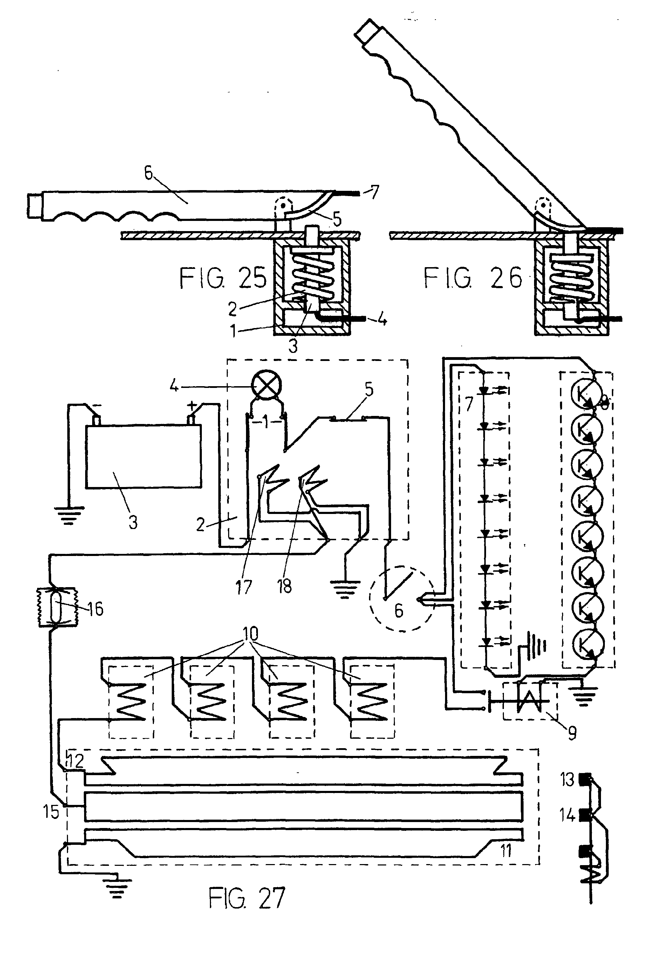

It is composed, figures 25 and 26, by a chassis (1) that lodged a pier (2) with an rod (3) in whose extreme is connected a wire (4) that drives the electric current coming from the main switch. The other extreme of the rod contacts with a piece (5) situated in the part lowered of the handbrake (6) when this is thrown.

### Infrared system.

Consist, fig. 19, in two columns (1) and (2) fixed inside of the carriage body of the confronted vehicle vertically to the final of the carriage body front, figures 20 and 21, that have the mission to detect any object that bothersome in the boot when the system is working. In the column (1) it takes on the broad cast that order motion you to the receivers of the column (2). Upon be broken momentarily any of the bundles of infrared rays stopped to pass electric current to the main switch and the anchors fixed in the most passing next drill.

### The switch relay.

The relay (9), fig. 27, it actives with the electric current that drives across the photo-receivers to GND. Of this manner closed the circuit of electric current toward the mooring charges (10), the lineal switch (11) and the relays (17) and (18) of the main switch (2).

### General Functioning of the system.

As security measure the vehicle can not enlarge or reduce when this is moving. It is necessary that is thrown the handbrake blocking the rear wheels, while we are giving march forward in the case of to enlarge it or back march in the case to reduce it. Therefore couple a switch in the handbrake, of manner that the circuit does not works if is not thrown. In the fig. 27, when we push the ON key (1) of the main switch (2) the electric current of the battery (3) raisin to slant of the lamp (4), that lights, and across the terminals (5) of the OFF key, leaving until the switch (6) of the handbrake. In this point the electric current was forked in three directions: one of them toward to the light. emitting diodes (7) that with the active rays the pass of electric current of the line of photo-receivers (8) which connect to GND across the coil of the switch relay (9). And finally the current that drives across the terminals of that switch relay toward the mooring charges (10). Upon driving electric current across them they are activated, liberating both parts of guides and letting make the operation. The electric current drives across the lineal switch (11) entering by the terminal (12), driving from the broom (13) to the (14), leaving the terminal (15) until the fuse (16) of the fuses box. Finally the electric current arrives to GND across the relays (17) and (18) activating and keeping sunken the ON key (1) of the main switch (2). In these conditions, the mooring charges Follow liberated and can enlarge or to reduce the vehicle. Upon arriving to the final of the travelled, the lineal switch (14) deactivates the circuit automatically stopping the flow of electric current toward the relays (17) and (18) of the main switch (2). Then, relays ofthe mooring charges (10) are activated and these stop the guides.

The circuit also deactivates automatically if an object of the boot breaks, though only should be for an instant, some of the lines of infrared lights, deactivating the switch relay (9) stopping the driving of electric current to the rest of the circuit. It does not drives current to the relays (17) and (18), of the main switch (2) too, making stop irremediably the ON key (1) bonding the mooring charges (10) and stopping the process.

## Claims

1. Spatial enlargement vehicles system, figures 1 and 2, distinguished to present the carriage body divided in two parts (front and rear) that couple an in the other and displace lengthwise directing, by mediate of some guides, fig. 6, the movement of enlargement or reduction.
With respect to the remainder of vehicles not to enlarge possesses the advantage to increase the inner space of the same when thus windscreen wiper required, so that to be able reduce the longitude in parking manoeuvres lot if the space enlarges is not occupied.

2. Guide of the spatial enlargement vehicles system, fig. 6, distinguished to present two main pieces clearly differentiated (1) and (2).
The piece (1) is a square tube that has a longitudinal groove in the part lowered and a lapel (8) placed to 45 degrees that surrounds it near an extreme.
The piece (2) is more complex. Possessed a big square tube (2) united to other small one (4) that carries some ball bearings (3) by that was displaced the piece (1). These ball bearings (3) are subjects by the axes (5) and the pieces (6).

3. Mooring charge of the spatial enlargement vehicles system, fig. 12, distinguished to present a winding (1) that actives the rod (2), liberating the guide so that the vehicle could make the operations of enlargement or reduction.

4. Main switch of the spatial enlargement vehicles system, figures 22, 23 and 24, distinguished to present internally two little relays (2) and (3). To driving electric current across them, bond the ON key (6) upon to be pushed and liberate it when stopped driving electric current across them, regulating seized the circuit working.

5. Lineal switch of the spatial enlargement vehicles system, fig. 15, distinguished to presents a relay and a no conductor piece (1) with three copper pieces along it, over that circulate windscreen wiper of the relay. This was distinguished by having a chassis (2) that lodged a rod (4) in that has coupled windscreen wiper (9), (10) and (11). This rod, upon being act by the electric current that raisin by the winding (3), defeats the action of the pier (12) displacing the group of rod and windscreen wiper lengthwise, watering seized the pass of electric current by the circuit, and thus across the mooring charges.

6. Handbrake switch of the spatial enlargement vehicles system, figures 25 and 26, distinguished to present a rod (3) that drives electric current when it makes electric contact with the piece (5) situated in the part lowered the lever of the handbrake, closing the electric circuit.

7. Infrared system of the spatial enlargement vehicles system, fig. 19, distinguished to present two columns (1) and (2), fixed to the carriage body to both sides of the boot, in which are installed the light emitting diodes and the photo-receivers respectively. Upon reducing the vehicle detect if there is some object in the boot stopping the driving of electric current across the circuit and stopping the operation.
